# EUROPÄISCHE PATENTSCHRIFT

(11) **EP 2 844 989 B1**
(45) Veröffentlichungstag und Bekanntmachung des Hinweises auf die Patenterteilung: **06.07.2016**
(21) Anmeldenummer: 13713915.0
(22) Anmeldetag: 04.04.2013
(51) Int. Cl.: G01N 27/22, G01R 27/26

(54) **SCHALTUNGSANORDNUNG ZUR MESSUNG EINER SENSORELEMENTKAPAZITÄT**
CIRCUIT ARRANGEMENT FOR MEASURING A SENSOR ELEMENT CAPACITANCE
ENSEMBLE DE CIRCUITS POUR MESURER LA CAPACITÉ D'UN ÉLÉMENT DE DÉTECTION

(30) Priorität: 04.05.2012 DE 102012207430
(43) Veröffentlichungstag der Anmeldung: 11.03.2015
(73) Patentinhaber: Robert Bosch GmbH, 70442 Stuttgart (DE)
(72) Erfinder: SCHNEIDER, Norbert, 75233 Tiefenbronn (DE); GUERER, Metin, 71634 Ludwigsburg (DE); WENZEL, Karl, 70499 Stuttgart (DE); HAAG, Axel-Werner, 70563 Stuttgart (DE); REISCHL, Rolf, 70499 Stuttgart (DE)
(86) Internationale Anmeldenummer: PCT/EP2013/057091
(87) Internationale Veröffentlichungsnummer: WO 2013/164152

(56) Entgegenhaltungen:
- EP-A1- 1 341 306
- DE-A1- 10 204 572
- DE-A1-102010 001 377
- US-A- 5 343 157
- US-B2- 7 084 644

## Beschreibung

### Technisches Gebiet

Die vorliegende Erfindung betrifft Schaltungsanordnungen zur Messung einer Sensorelementkapazität, insbesondere Schaltungsanordnungen, die eine Kapazität mithilfe eines Mikrocontrollers ermitteln. Weiterhin betrifft die vorliegende Erfindung Schaltungsanordnungen für eine kapazitive Feuchtemessung.

### Stand der Technik

Feuchtemessungen, die den Feuchtigkeitsgehalt von Luft angeben, werden üblicherweise mithilfe eines kapazitiven Feuchtesensors durchgeführt. Zur Bestimmung der Feuchtigkeit in der Luft wird die Kapazität des Feuchtesensors zumindest relativ zu einer Referenzkapazität ermittelt und einem Feuchtewert zugeordnet.

Aus der Druckschrift US 7,084,644 B2 ist eine Schaltungsanordnung zur Messung der Feuchtigkeit mithilfe eines kapazitiven Feuchtesensors und mithilfe eines Mikrocontrollers dargestellt. Zur Messung der Feuchtigkeit wird der Feuchtesensor wiederholt aufgeladen und in ein Ladungsspeicherelement entladen und abgefragt, wenn die Spannung über dem Ladungsspeicherelement einen Schwellenwert erreicht bzw. übersteigt. Die Anzahl der Entladevorgänge stellt dann ein Maß für die Kapazität des Feuchtesensors dar. Um die Entladevorgänge des Feuchtesensors ohne eine Entladung des Ladungsspeicherelements durchführen zu können, ist eine Schutzdiode bzw. ein Schalter vorgesehen, der zum Zeitpunkt des Aufladens des Feuchtesensors diesen von dem Ladungsspeicherelement trennt.

Aus der Druckschift DE 102010001377 ist ebenfalls eine art verwandte Schaltungsanordnung bekannt.

### Offenbarung der Erfindung

Erfindungsgemäß ist eine Schaltungsanordnung zur Messung einer Sensorelementkapazität eines Sensorelements gemäß Anspruch 1 vorgesehen.

Weitere vorteilhafte Ausgestaltungen der vorliegenden Erfindung sind in den abhängigen Ansprüchen angegeben.

Gemäß einem Aspekt ist eine Schaltungsanordnung zur Messung einer Sensorelementkapazität eines Sensorelements, insbesondere eines kapazitiven Feuchtesensors, vorgesehen, umfassend:
- das Sensorelement, das die Sensorelementkapazität aufweist;
- ein Ladungsspeicherelement, das unmittelbar oder lediglich über ein ohmsches Widerstandselement seriell mit dem Sensorelement verbunden ist; und
- eine Steuereinheit, die ausgebildet ist, um das Ladungsspeicherelement auf eine Referenzspannung aufzuladen und über die Sensorelementkapazität sukzessive umzuladen, bis das Ladungsspeicherelement eine bestimmte Vergleichsspannung erreicht, wobei die so ermittelte Sensorelementanzahl der Umladevorgänge eine Angabe über die Sensorelementkapazität des Sensorelements darstellt.

Eine Idee der obigen Schaltungsanordnung zur Messung des kapazitiven Sensorelements besteht darin, diese lediglich unter Verwendung von passiven Bauelementen, wie Kapazitäten und Widerständen, und eines Mikrocontrollers aufbauen zu können, während bei der Schaltungsanordnung gemäß dem oben beschriebenen Stand der Technik zusätzlich eine Diode bzw. ein oder mehrere Schalter zum Schalten von analogen elektrischen Größen extern des Mikrocontrollers vorgesehen werden müssen.

Durch die Realisierung der Schaltungsanordnung ohne die zusätzlichen aktiven Bauelemente kann zum einen der Aufwand für die Herstellung der Schaltungsanordnung reduziert und zum anderen auch deren Zuverlässigkeit erhöht werden.

Im Prinzip wird dies dadurch erreicht, dass das Ladungsspeicherelement bei einigen Schaltzuständen von einem gemeinsamen Referenzpotential getrennt werden kann, wodurch die Auswertung ohne einen Schalter bzw. eine Schaltdiode ermöglicht wird.

Weiterhin kann vorgesehen sein, dass die Steuereinheit zum Umladen der Sensorelementkapazität entladen wird und anschließend in Reihe mit dem Ladungsspeicherelement geschaltet wird, so dass sich die Ladung des Ladungsspeicherelements auf das Ladungsspeicherelement und das Sensorelement verteilt.

Gemäß einer Ausführungsform kann ein Referenzelement mit einer Referenzelementkapazität vorgesehen sein. Die Steuereinheit kann weiterhin ausgebildet sein, um das Ladungsspeicherelement auf eine Referenzspannung aufzuladen und über die Referenzelementkapazität sukzessive umzuladen, bis das Ladungsspeicherelement die bestimmte Vergleichsspannung erreicht, wobei die so ermittelte Referenzelementanzahl der Umladevorgänge mithilfe des Referenzelements eine Angabe über die Referenzelementkapazität des Referenzelements darstellt, wobei die Sensorelementkapazität aus dem Wert der Referenzelementkapazität, der Referenzelementanzahl und der Sensorelementanzahl ermittelbar ist.

Insbesondere kann die Steuereinheit ausgebildet sein, um das Umladen des Ladungsspeicherelements mithilfe der Sensorelementkapazität und das Umladen des Ladungsspeicherelements mithilfe der Sensorelementkapazität jeweils gemäß einer ersten und einer zweiten vorgegebenen Zykluszeit durchzuführen und um zur Ermittlung der Sensorelementkapazität einen Referenzelement-Offsetwert durch lineare Extrapolation der bei der ersten und der zweiten Zykluszeit ermittelten Referenzelementanzahlen der Umladevorgänge mithilfe des Referenzelements auf eine Zykluszeit von Null und einen Sensorelement-Offsetwert durch lineare Extrapolation der bei der ersten und der zweiten Zykluszeit ermittelten Sensorelementanzahlen der Umladevorgänge mithilfe des Sensorelements auf eine Zykluszeit von Null zu bestimmen und um die Referenzelementanzahl und die Sensorelementanzahl vor der Bestimmung der Sensorelementkapazität mit dem Referenzelement-Offsetwert bzw. dem Sensorelement-Offsetwert zu beaufschlagen.

Weiterhin kann die Steuereinheit einem Mikrocontroller entsprechen, der Anschlüsse und ein Schalternetzwerk aufweist, wobei das Schalternetzwerk für jeden der Anschlüsse einen ersten Schalter zum Verbinden des Anschlusses mit einem Referenzpotential und einen zweiten Schalter zum Verbinden des Anschlusses mit einem Bezugspotenzial aufweist.

Es kann vorgesehen sein, dass das Sensorelement und das Ladungsspeicherelement jeweils zwischen zwei Anschlüssen der Steuereinheit angeschlossen und mit einem gemeinsamen Anschluss verbunden sind.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung einer Schaltungsanordnung zum Messen einer Sensorelementkapazität;
- Figur 2: ein Flussdiagramm zur Veranschaulichung des von dem Mikrocontroller ausgeführten Messverfahrens; und
- Figur 3: eine schematische Darstellung einer weiteren Schaltungsanordnung zum Messen einer Sensorelementkapazität.

### Beschreibung von Ausführungsformen

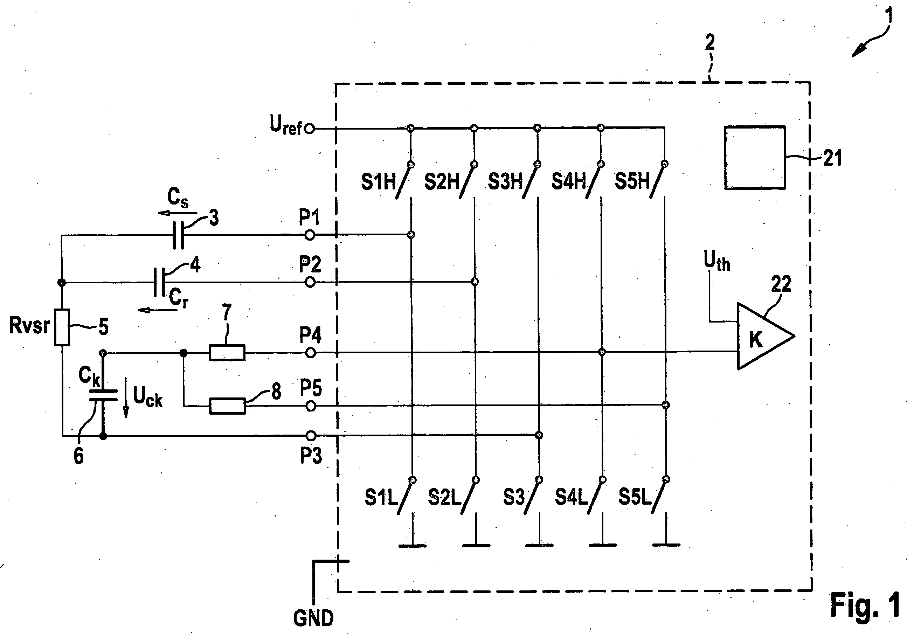

Figur 1 zeigt eine Schaltungsanordnung 1 mit einem Mikrocontroller 2, der Anschlüsse P1 bis P5 aufweist. Der Mikrocontroller 2 umfasst eine Steuereinheit 21 und erste Schaltelemente S1 H bis S5H, um den entsprechenden Anschluss P1 bis P5 je nach Schaltzustand mit einer Referenzspannung U_{ref} zu verbinden oder von dieser zu trennen. Die Referenzspannung U_{ref} kann in dem Mikrocontroller 2 intern aus einer Versorgungsspannung erzeugt werden oder, wie in Figur 1 dargestellt, über einen gesonderten Referenzspannungsanschluss dem Mikrocontroller 2 von extern bereitgestellt werden. Es sind zweite Schaltelemente S1 L bis S5L vorgesehen, um den jeweiligen Anschluss P1 bis P5 je nach Schaltzustand mit einem Massepotential GND zu verbinden. Die Steuereinheit 21 ist mit Steueranschlüssen der Schaltelemente S1 H bis S5H, S1 L bis S5L verbunden, um diese zu öffnen und zu schließen.

Extern des Mikrocontrollers 2 sind am ersten Anschluss P1 ein erster Anschluss eines kapazitiven Sensorelements 3, beispielsweise eines Feuchtesensors, mit einer Sensorelementkapazität Cₛ angeschlossen. Im Falle eines Feuchtesensors als Sensorelement 3 variiert die Sensorelementkapazität abhängig von der relativen Luftfeuchtigkeit.

An einem zweiten Anschluss P2 des Mikrocontrollers 2 ist ein erster Anschluss eines kapazitiven Referenzelements 4 mit einer Referenzelementkapazität Cᵣ angeschlossen. Die zweiten Anschlüsse des Sensorelements 3 und des Referenzelements 4 sind zusammen geschaltet und über einen ersten Widerstand 5 (Widerstandselement) mit einem dritten Anschluss P3 des Mikrocontrollers 2 verbunden.

Weiterhin ist ein kapazitives Ladungsspeicherelement 6 vorgesehen, dessen erster Anschluss über einen zweiten Widerstand 7 mit dem vierten Anschluss P4 des Mikrocontrollers 2 verbunden ist. Ein zweiter Anschluss des Ladungsspeicherelements 6 ist mit dem dritten Anschluss P3 des Mikrocontrollers 2 verbunden.

Der erste Anschluss des Ladungsspeicherelements 6 ist weiterhin mit einem Wärmewiderstandselement 8 verbunden, dessen zweiter Anschluss mit einem fünften Anschluss P5 des Mikrocontrollers 2 verbunden ist. Das Wärmewiderstandselement 8 weist einen wärmeabhängigen Widerstandswert auf und kann an dem Sensorelement 3 angeordnet sein, so dass ein Temperaturausgleich zwischen dem Sensorelement 3 und dem Wärmewiderstandselement 8 stattfindet.

Integriert im Mikrocontroller 2 ist der vierte Anschluss P4 mit einem Vergleichselement 22 verbunden, das die an dem Anschluss P4 anliegende Spannung mit einer Vergleichsspannung Uₜₕ, die mikrocontrollerintern erzeugt und bereitgestellt wird, vergleicht und ein entsprechendes Vergleichsergebnissignal E als Vergleichsergebnis bereitstellt, je nachdem, ob die an dem Anschluss P4 anliegende Spannung größer ist als die Vergleichsspannung Uₜₕ oder nicht.

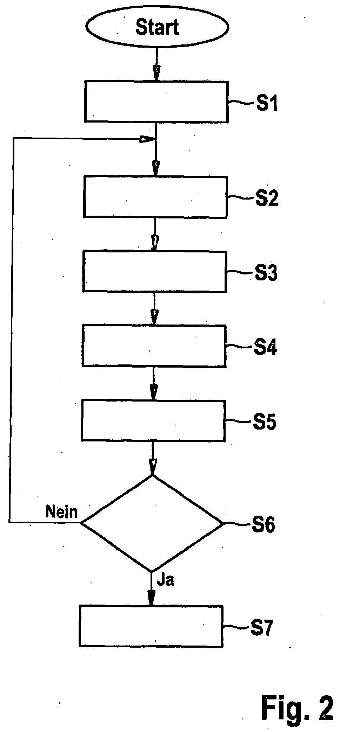

Das Verfahren zur Messung einer Angabe über die Sensorelementkapazität Cₛ wird durch die Steuereinheit 21 des Mikrocontrollers 2 durchgeführt und in Verbindung mit dem Flussdiagramm der Figur 2 näher beschrieben.

Im Detail erfolgt die Auswertung des Sensorelements 3 zunächst in Schritt S1 durch Aufladen des Ladungsspeicherelements 6 auf die Referenzspannung U_{ref}, indem mindestens die mit dem vierten und fünften Anschluss P4, P5 des Mikrocontrollers 2 verbundenen ersten Schalter S4H, S5H geschlossen werden und der zweite Anschluss des Ladungsspeicherelements 6, der mit dem dritten Anschluss P3 des Mikrocontrollers 2 verbunden ist, über den geschlossenen zweiten Schalter S3L mit dem Massepotential GND verbunden wird. Die Schalterstellungen werden mindestens so lange beibehalten, bis das Ladungsspeicherelement 6 vollständig auf die Referenzspannung U_{ref} aufgeladen ist. Gleichzeitig wird ein Zählerwert des in der Steuereinheit 21 befindlichen Zählers auf einen festgelegten Vorgabewert, z. B. auf Null, zurückgesetzt.

In einem nächsten Schritt S2 wird der mit dem ersten Anschluss P1 des Mikrocontrollers 2 verbundene zweite Schalter S1L geschlossen, während der dem dritten Anschluss P3 zugeordnete zweite Schalter S3L geschlossen wird bzw. bleibt, um beide Anschlüsse des Sensorelements 3 mit dem Massepotential GND zu verbinden und dieses so zu entladen. Bei der erstmaligen Ausführung des Schritts S2 für eine Messung kann dieser auch zeitgleich mit Schritt S1 durchgeführt werden.

In einem nächsten Schritt S3 wird der dem dritten Anschluss P3 zugeordnete zweite Schalter S3L wieder geöffnet und anschließend wird in Schritt S4 der mit dem ersten Anschluss P1 des Mikrocontrollers 2 verbundene zweite Schalter S1 L geschlossen, um den zweiten Anschluss des Ladungsspeicherelements 6 über das Sensorelement 3 mit dem Massepotential GND zu verbinden.

Die in dem Ladungsspeicherelement 6 gespeicherte Ladung wird dann entsprechend der Sensorelementkapazität Cₛ und der Ladungsspeicherelementkapazität auf das Sensorelement 3 und das Ladungsspeicherelement 6 verteilt, so dass die in dem Ladungsspeicherelement 6 gespeicherte Ladung inkrementell um einen bestimmten Betrag reduziert wird.

Anschließend werden in Schritt S5 die zweiten Schalter S1 L geöffnet und mithilfe des Vergleichselements 22 wird überprüft, ob die Spannung, die in dem Ladungsspeicherelement 6 gespeichert ist, die vorgegebene Vergleichsspannung Uₜₕ unterschreitet.

Wird in Schritt S6 festgestellt, dass die an dem Vergleichselement 22 anliegende Spannung die Vergleichsspannung Uₜₕ nicht unterschreitet (Alternative: Nein), so wird ein Zählerwert des in der Steuereinheit 21 befindlichen Zählers inkrementiert und es werden die obigen Schritte S2 bis S5 wiederholt durchgeführt. Wird in Schritt S6 festgestellt, dass die an dem Vergleichselement 22 anliegende Spannung die Vergleichsspannung Uₜₕ überschreitet (Alternative: Ja), so stellt der in dem Zähler gespeicherte Zählerwert n_{Cs} eine Angabe über die Sensorelementkapazität Cₛ des Sensorelements 3 dar.

Das Prinzip der Messung der Sensorelementkapazität Cₛ des Sensorelements 3 besteht darin, dass die Ladungsspeicherelementkapazität Cₖ des Ladungsspeicherelements 6 auf eine konstante Spannung U_{ref} aufgeladen wird. Dann wird die Ladungsspeicherelementkapazität Cₖ des Ladungsspeicherelements 6 sukzessive mithilfe der Sensorelementkapazität Cₛ des Sensorelements 3 entladen, indem nacheinander gleiche Ladungsanteile, die sich aus dem Verhältnis der Ladungsspeicherkapazität Cₖ des Ladungsspeicherelements 6 und der Sensorelementkapazität Cₛ des Sensorelements 3 ergeben, von der Kapazität des Ladungsspeicherelements 6 entnommen werden, bis die Spannung U_{Ck} über dem Ladungsspeicherelement 6 die Schwellenspannung Uₜₕ erreicht. Die Anzahl n_{Cs} der für diese Entladung erforderlichen Schaltzyklen wird durch die Steuereinheit 21 gezählt und ist für eine konstante Ladungsspeicherkapazität des Ladungsspeicherelements 6 und für eine konstante Vergleichsspannung Uₜₕ proportional zu 1/Cₛ.

Die Sensorelementkapazität Cₛ des Sensorelements 3 ist abhängig von der Sensortemperatur. Aus diesem Grund ist zum Messen der Feuchte auch die Temperatur des Sensorelements 3 zu erfassen und bei der Berechnung der Feuchte zu berücksichtigen.

Die Toleranzen der Ladungsspeicherelementkapazität Cₖ des Ladungsspeicherelements 6 können in einem Abgleichprozess ausgeglichen werden. Dazu wird das oben beschriebene Verfahren anstelle mit Entladungen durch das Sensorelement 3 durch Entladungen des Ladungsspeicherelements 6 über das Referenzelement 4, das eine definierte Referenzelementkapazität Cᵣ aufweist, durchgeführt und so eine Anzahl n_{Cr} von Referenzzyklen ermittelt, die zum Entladen des Ladungsspeicherelements 6 auf die Vergleichsspannung erforderlich sind. Die Sensorelementkapazität Cₛ des Sensorelements 3 ergibt sich dann aus dem Verhältnis der Anzahl n_{Cs} der ermittelten Zyklen bei Entladen des Ladungsspeicherelements 6 mit dem Sensorelement 3 und der Referenzanzahl n_{Cr} von Zyklen für das Entladen des Ladungsspeicherelements 6 mit dem Referenzelement 4, multipliziert mit der Referenzelementkapazität Cᵣ des Referenzelements 4. Auf diese Weise ist die Messung unabhängig von der Ladungsspeicherelementkapazität Cₖ des Ladungsspeicherelements 6 und der angelegten Referenzspannung U_{ref}.

Folglich wird für jede Messung nacheinander das Entladen des Ladungsspeicherelements 6 mithilfe des Sensorelements 3 und das Entladen des Ladungsspeicherelements 6 mithilfe des Referenzelements 4 durchgeführt, um die jeweilige Zyklenanzahl n_{Cs}, n_{Cr} zu ermitteln.

Restströme, die in der Beschaltung auftreten können, können durch einen Kalibriervorgang mit zwei verschiedenen Zykluszeiten ermittelt und kompensiert werden. Die Zykluszeit entspricht der Zeitdauer, während der der Umladevorgang des Schritts S4 durchgeführt wird. Die Zyklusdauer t_{cyc} soll für alle Umladevorgänge einer Messung sowohl bei der Messung der Sensorelementkapazität Cₛ als auch bei der Referenzelementkapazität Cᵣ konstant sein.

Bei dem Kalibriervorgang werden die Auswerteergebnisse sowohl bei der obigen Sensorelementkapazitätsmessung als auch bei der Referenzelementkapazitätsmessung mit zwei verschiedenen Zykluszeiten linear auf eine Zykluszeit von 0 linear extrapoliert. Auf diese Weise kann der zeitabhängige Einfluss der Restströme auf die Zählergebnisse beim Zählen des Entladens des Ladungsspeicherelements 6 mit dem Sensorelement 3 bzw. mit dem Referenzelement 4 ermittelt werden und durch Subtrahieren der durch die lineare Extrapolation der Zählergebnisse bei verschiedenen Zykluszeiten auf eine Zykluszeit von 0 können die Zähler-Offsetwerte ermittelt werden, die von den zuvor bei beiden Messungen ermittelten Zählerwerten n_{Cr}, n_{Cs} vor deren Division zur Ermittlung der Sensorelementkapazität subtrahiert werden.

Eine Temperaturauswertung kann analog zur Vorgehensweise bei der Ermittlung der Sensorelementkapazität des Sensorelements 3 durchgeführt werden. Die Entladung des Ladungsspeicherelements 6 wird jedoch nicht über das Sensorelement 3, sondern über das Wärmewiderstandselement 8, das einen positiven Temperaturgradienten (PTC) aufweist, durchgeführt. Dazu wird der dritte Anschluss P3 des Mikrocontrollers 2 über den entsprechenden zweiten Schalter S3L mit dem Massepotential GND verbunden und der fünfte Anschluss P5 des Mikrocontrollers 2 wird über den entsprechenden zweiten Schalter S5L ebenfalls mit dem Massepotential GND verbunden, so dass ein Entladestrom über das Wärmewiderstandselement 8 fließt, der die über dem Ladungsspeicherelement 6 abfallende Spannung U_{Ck} kontinuierlich vermindert. Es kann die Entladezeitdauer zwischen dem vollständig aufgeladenen Zustand der Ladungsspeicherelementkapazität Cₖ und der Entladezeitdauer bis zu einem Zeitpunkt, zu dem die Spannung U_{ck} die Vergleichsspannung Uₜₕ erreicht, gemessen werden. Die Entladezeitdauer kann durch einen im Mikrocontroller 2 vorgesehenen Zeitmesser gezählt und ermittelt werden.

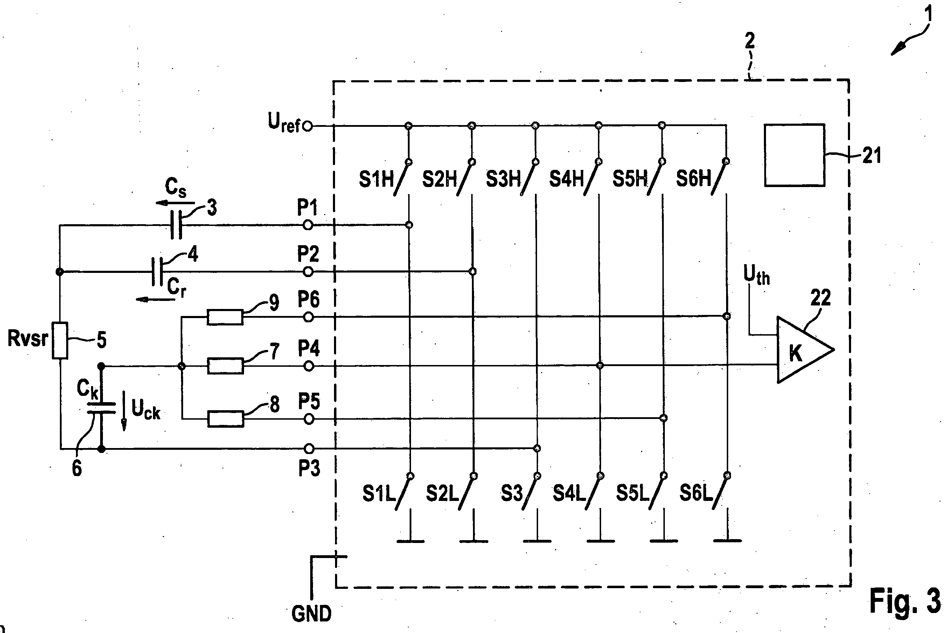

Die Toleranzen der Ladungsspeicherelementkapazität Cₖ des Ladungsspeicherelements 6 und der Referenzspannung U_{ref} werden in dem Abgleichprozess mit einem Referenzwiderstand vorgenommen. Dazu ist, wie in Figur 3 dargestellt, zusätzlich zu der Beschaltung der in Figur 1 gezeigten Anordnung, an dem ersten Anschluss des Ladungsspeicherelements 6 ein erster Anschluss des Referenzwiderstands 9 angeschlossen, dessen zweiter Anschluss mit einem sechsten Anschluss P6 des Mikrocontrollers 2 verbunden ist. Im Mikrocontroller ist dem sechsten Anschluss ein entsprechender erster Schalter S6H zum Verbinden mit dem Versorgungspotential und ein zweiter Schalter S6L zum Verbinden mit dem Massepotential GND vorgesehen. Zum Entladen des Ladungsspeicherelements 6 über den Referenzwiderstand 9 wird der dem sechsten Anschluss P6 zugeordnete zweiter Schalter S6L geschlossen, und die Zeitdauer tᵣ bestimmt, bis die Spannung des Ladungsspeicherelements 6 die Vergleichsspannung Uₜₕ unterschreitet. Die Zeitdauer zum Entladen des Ladungsspeicherelements 6 über den Referenzwiderstand 9 kann ebenfalls durch den internen Zeitgeber ermittelt werden. Der genaue Widerstandswert des Wärmewiderstandselements 8 wird durch das Verhältnis der so gemessenen Zeitdauern, multipliziert mit dem bekannten Widerstandswert des Referenzwiderstands 9, ermittelt.

Da bei der Auswertung des Referenzelements 4 auch die feuchteabhängigen parasitären Kapazitäten einer verwendeten Leiterplatte einen Einfluss auf die Messung ausüben, ist für diese Auswertung eine Feuchtekorrektur (Querempfindlichkeitskorrektur) erforderlich. Dabei werden in Abhängigkeit von einem tiefpassgefilterten Feuchtesignal, nämlich einer Durchfeuchtungszeitkonstanten der Leiterplatte, für die Ermittlung des Feuchtigkeitsgehalts unterschiedliche Korrekturen berechnet. Die Feuchteempfindlichkeit der Auswertung des Referenzelements 4 betrifft die Ermittlung der Feuchte durch das Sensorelement 3 in geringerem Maße, da die Bestimmung der Sensorelementkapazität Cₛ des Sensorelements 3 von denselben parasitären Kapazitäten beeinflusst wird und so ein großer Teil des Effekts automatisch kompensiert wird, wenn die Sensorelementkapazität des Sensorelements 3 in etwa der Referenzelementkapazität des Referenzelements 4 entspricht.

## Patentansprüche

1. Schaltungsanordnung (1) zur Messung einer Sensorelementkapazität (Cₛ) eines Sensorelements (3), insbesondere eines kapazitiven Feuchtesensors, umfassend:
- das Sensorelement (3), das die Sensorelementkapazität (Cₛ) aufweist;
- ein Ladungsspeicherelement (6), das unmittelbar oder lediglich über ein Widerstandselement (5) seriell mit dem Sensorelement (3) verbunden ist; und
- eine Steuereinheit (21), die ausgebildet ist, um das Ladungsspeicherelement (6) auf eine Referenzspannung aufzuladen und über die Sensorelementkapazität (Cₛ) sukzessive umzuladen, bis das Ladungsspeicherelement (6) eine bestimmte Vergleichsspannung (Uₜₕ) erreicht, wobei die Umladung über die oben genannte unmitelbare serielle Verbindung oder das Widerstandselement erfolgt, wobei die so ermittelte Sensorelementanzahl (n_{Cs}) der Umladevorgänge eine Angabe über die Sensorelementkapazität (Cₛ) des Sensorelements (3) darstellt.

2. Schaltungsanordnung (1) nach Anspruch 1, wobei zum Umladen die Sensorelementkapazität (Cₛ) entladen und anschließend in Reihe mit dem Ladungsspeicherelement (6) geschaltet wird, so dass sich die Ladung des Ladungsspeicherelements (6) auf das Ladungsspeicherelement (6) und das Sensorelement (3) verteilt.

3. Schaltungsanordnung (1) nach Anspruch 1 oder 2, wobei ein Referenzelement (4) mit einer Referenzelementkapazität (Cᵣ) vorgesehen ist und wobei die Steuereinheit (21) weiterhin ausgebildet ist, um das Ladungsspeicherelement (6) auf eine Referenzspannung (Uref) aufzuladen und über die Referenzelementkapazität (Cᵣ) sukzessive umzuladen, bis das Ladungsspeicherelement (6) die bestimmte Vergleichsspannung (Uₜₕ) erreicht, wobei die so ermittelte Referenzelementanzahl (n_{Cr}) der Umladevorgänge mithilfe des Referenzelements (4) eine Angabe über die Referenzelementkapazität (Cᵣ) des Referenzelements (4) darstellt, wobei die Sensorelementkapazität (Cₛ) aus dem Wert der Referenzelementkapazität (Cᵣ), der Referenzelementanzahl (n_{Cr}) und der Sensorelementanzahl (n_{Cs}) ermittelbar ist.

4. Schaltungsanordnung (1) nach Anspruch 3, wobei die Steuereinheit (21) ausgebildet ist, um das Umladen des Ladungsspeicherelements (6) mithilfe der Sensorelementkapazität (Cₛ) und das Umladen des Ladungsspeicherelements (6) mithilfe der Sensorelementkapazität (Cₛ) jeweils gemäß einer ersten und einer zweiten vorgegebenen Zykluszeit durchzuführen und um zur Ermittlung der Sensorelementkapazität (Cs) einen Referenzelement-Offsetwert durch lineare Extrapolation der bei der ersten und der zweiten Zykluszeit ermittelten Referenzelementanzahlen (n_{Cr}) der Umladevorgänge mithilfe des Referenzelements (4) auf eine Zykluszeit von Null und einen Sensorelement-Offsetwert durch lineare Extrapolation der bei der ersten und der zweiten Zykluszeit ermittelten Sensorelementanzahlen (n_{Cs}) der Umladevorgänge mithilfe des Sensorelements (3) auf eine Zykluszeit von Null zu bestimmen und um die Referenzelementanzahl (n_{Cr}) und die Sensorelementanzahl (n_{Cs}) vor der Bestimmung der Sensorelementkapazität (Cₛ) mit dem Referenzelement-Offsetwert bzw. dem Sensorelement-Offsetwert zu beaufschlagen.

5. Schaltungsanordnung (1) nach einem der Ansprüche 1 bis 4, wobei die Steuereinheit (21) in einem Mikrocontroller umfasst ist, der Anschlüsse (P1-P6) und ein Schalternetzwerk aufweist, wobei das Schalternetzwerk für jeden der Anschlüsse einen ersten Schalter (S1H-S6H) zum Verbinden des Anschlusses mit einem ersten Potential, insbesondere einer Referenzspannung (U_{ref}), und einen zweiten Schalter (S1L-S6L) zum Verbinden des Anschlusses (P1-P6) mit einem zweiten Potential aufweist.

6. Schaltungsanordnung (1) nach Anspruch 5, wobei das Sensorelement (3) und das Ladungsspeicherelement (6) jeweils zwischen zwei Anschlüssen (P1-P6) der Steuereinheit (21) angeschlossen und mit einem Anschluss (P3) gemeinsam verbunden sind.

## Claims

1. Circuit arrangement (1) for measuring a sensor element capacitance (Cₛ) of a sensor element (3), in particular of a capacitive moisture sensor, comprising:
- the sensor element (3) having the sensor element capacitance (Cₛ);
- a charge storage element (6) connected in series with the sensor element (3) directly or only via a resistance element (5); and
- a control unit (21) designed to charge the charge storage element (6) to a reference voltage and to progressively subject it to charge reversal via the sensor element capacitance (Cₛ) until the charge storage element (6) attains a specific comparison voltage (Uₜₕ), wherein the charge reversal is effected via the abovementioned direct series connection or the resistance element, wherein the thus determined sensor element number (n_{Cs}) of the charge reversal processes represents an indication about the sensor element capacitance (Cₛ) of the sensor element (3).

2. Circuit arrangement (1) according to Claim 1, wherein for charge reversal the sensor element capacitance (Cₛ) is discharged and subsequently connected in series with the charge storage element (6), such that the charge of the charge storage element (6) is distributed between the charge storage element (6) and the sensor element (3).

3. Circuit arrangement (1) according to Claim 1 or 2, wherein a reference element (4) having a reference element capacitance (Cᵣ) is provided, and wherein the control unit (21) is furthermore designed to charge the charge storage element (6) to a reference voltage (Uref) and to progressively subject it to charge reversal via the reference element capacitance (Cᵣ) until the charge storage element (6) attains the specific comparison voltage (Uₜₕ), wherein the thus determined reference element number (n_{Cr}) of the charge reversal processes with the aid of the reference element (4) represents an indication about the reference element capacitance (Cᵣ) of the reference element (4), wherein the sensor element capacitance (Cₛ) is determinable from the value of the reference element capacitance (Cᵣ), the reference element number (n_{Cr}) and the sensor element number (n_{Cs}).

4. Circuit arrangement (1) according to Claim 3, wherein the control unit (21) is designed to carry out the charge reversal of the charge storage element (6) with the aid of the sensor element capacitance (Cₛ) and the charge reversal of the charge storage element (6) with the aid of the sensor element capacitance (Cₛ) respectively in accordance with a first and a second predefined cycle time and, for the purpose of determining the sensor element capacitance (Cₛ), to ascertain a reference element offset value by linear extrapolation of the reference element numbers (ncr) - determined during the first and the second cycle times - of the charge reversal processes with the aid of the reference element (4) to a cycle time of zero and to ascertain a sensor element offset value by linear extrapolation of the sensor element numbers (n_{Cs}) - determined during the first and second cycle times - of the charge reversal processes with the aid of the sensor element (3) to a cycle time of zero, and to apply the reference element offset value and the sensor element offset value to the reference element number' (n_{Cr}) and the sensor element number (n_{Cs}), respectively, before the sensor element capacitance (Cₛ) is ascertained.

5. Circuit arrangement (1) according to any of Claims 1 to 4, wherein the control unit (21) is comprised in a microcontroller having terminals (P1-P6) and a switch network, wherein the switch network has for each of the terminals a first switch (S1H-S6H) for connecting the terminal to a first potential, in particular a reference voltage (U_{ref}), and a second switch (S1L-S6L) for connecting the terminal (P1-P6) to a second potential.

6. Circuit arrangement (1) according to Claim 5, wherein the sensor element (3) and the charge storage element (6) are in each case connected between two terminals (P1-P6) of the control unit (21) and are jointly connected to a terminal (P3).

## Revendications

1. Système de circuit (1) destiné à mesurer une capacité d'élément détecteur (Cₛ) d'un élément détecteur (3), notamment d'un capteur d'humidité capacitif, comprenant :
- l'élément détecteur (3), qui comporte la capacité d'élément détecteur (Cₛ);
- un élément accumulateur de charge (6), qui est connecté en série à l'élément détecteur (3) directement ou uniquement par l'intermédiaire d'un élément résistif (5) ; et
- une unité de commande (21), qui est conçue pour charger l'élément accumulateur de charge (6) à une tension de référence et pour le recharger successivement par l'intermédiaire de la capacité d'élément détecteur (Cₛ) jusqu'à ce que l'élément accumulateur de charge (6) atteigne une tension de comparaison (Uₜₕ) déterminée, dans lequel le rechargement s'effectue par l'intermédiaire de ladite connexion directe en série ou de l'élément résistif, dans lequel le nombre d'éléments détecteurs (n_{Cs}) ainsi obtenu du processus de rechargement représente une donnée concernant la capacité d'élément détecteur (Cₛ) de l'élément détecteur (3).

2. Système de circuit (1) selon la revendication 1, dans lequel, pour le rechargement, la capacité d'élément détecteur (Cₛ) est rechargée et est ensuite connectée en série à l'élément accumulateur de charge (6) de manière à ce que la charge de l'élément accumulateur de charge (6) soit divisée entre l'élément accumulateur d'énergie (6) et l'élément détecteur (3).

3. Système de circuit (1) selon la revendication 1 ou 2, dans lequel il est prévu un élément de référence (4) ayant une capacité d'élément de référence (Cᵣ) et dans lequel l'unité de commande (21) est en outre conçue pour charger l'élément accumulateur de charge (6) à une tension de référence (Uref) et pour le recharger successivement par l'intermédiaire de la capacité d'élément de référence (Cᵣ) jusqu'à ce que l'élément accumulateur de charge (6) atteigne la tension de comparaison (Uₜₕ) déterminée, dans lequel le nombre d'éléments de référence (n_{Cr}) ainsi obtenu du processus de rechargement à l'aide de l'élément de référence (4) représente une donnée concernant la capacité d'élément de référence (Cᵣ) de l'élément de référence (4), dans lequel la capacité d'élément détecteur (Cₛ) peut être déterminée à partir de la valeur de la capacité d'élément de référence (Cᵣ), du nombre d'éléments de référence (n_{Cr}) et du nombre d'éléments détecteurs (n_{Cs}).

4. Système de circuit (1) selon la revendication 3, dans lequel l'unité de commande (21) est conçue pour effectuer respectivement le rechargement de l'élément accumulateur de charge (6) par l'intermédiaire de la capacité d'élément détecteur (Cₛ) et le rechargement de l'élément accumulateur de charge (6) par l'intermédiaire de la capacité d'élément détecteur (Cₛ) conformément à des premier et second temps de cycle prédéterminés et, pour déterminer la capacité d'élément détecteur (Cₛ), déterminer une valeur de décalage d'élément de référence par extrapolation linéaire des nombres d'éléments de référence (n_{Cr}) déterminés lors des premier et second temps de cycle du processus de rechargement à l'aide de l'élément de référence (4) pour un temps de cycle égal à zéro et déterminer une valeur de décalage d'élément détecteur par extrapolation linéaire des nombres d'éléments détecteurs (ncs) déterminés lors des premier et second temps de cycle du processus de rechargement à l'aide de l'élément détecteur (3) pour un temps de cycle égal à zéro et pour appliquer au nombre d'éléments de référence (n_{Cr}) et au nombre d'éléments détecteurs (n_{Cs}), avant la détermination de la capacité d'élément détecteur (Cₛ), la valeur de décalage d'élément de référence ou la valeur de décalage d'élément détecteur.

5. Système de circuit (1) selon l'une quelconque des revendications 1 à 4, dans lequel l'unité de commande (21) comprend un microcontrôleur qui comporte des bornes (P1-P6) et un réseau de commutation, dans lequel le réseau de commutation comporte, pour chacune des bornes, un premier commutateur (S1H-S6H) pour connecter la borne à un premier potentiel, notamment à une tension de référence (U_{ref}), et un second commutateur (S1L-S6L) pour connecter la borne (P1-P6) à un second potentiel.

6. Système de circuit (1) selon la revendication 5, dans lequel l'élément détecteur (3) et l'élément accumulateur de charge (6) sont respectivement raccordés entre deux bornes (P1-P6) de l'unité de commande (21) et sont connectés en commun à une borne (P3).
